# EUROPEAN PATENT APPLICATION

(11) **EP 1 254 808 A1**
(43) Date of publication of application: **06.11.2002**
(21) Application number: 02251782.5
(22) Date of filing: 13.03.2002
(51) Int. Cl.: B60Q 1/26, E05B 65/12, B60R 16/00, E05B 17/10

(54) **Vehicle door latch**

(30) Priority: 17.04.2001 GB 0109316
(71) Applicant: ArvinMeritor Light Vehicle Systems (UK) Ltd, Birmingham, West Midlands, B30 3BW (GB)
(72) Inventor: Bromhall, Adrian, Wolverhampton, West Midlands B30 3BW (GB)
(74) Representative: Jones, John Bryn

(57) **Abstract**

A vehicle door latch including a light emitting source.

## Description

The present invention relates to vehicle door latches.

Known vehicles, such as cars, include passenger doors mounted on the side of the vehicle and hinged at a front edge in order to open outwardly. Such doors include a light emitting source positioned at a lower portion of a rearwardly facing edge surface of the door (considering the door in a closed position).

The light source is used to warn other road users that the door is open.

Significant costs are associated with providing such a light. Thus, the light has to be provided along with a housing arrangement and an arrangement for securing it to the door. Furthermore associated wiring has to be provided and a pierced hole has to be provided in the door for the light source and also further piercings for screws in order to secure the light source housing to the door.

An object of the present invention is to provide an improved light emitting source on a vehicle door which is cheaper to provide and/or easier to assemble.

Thus according to the present invention there is provided a vehicle door latch including a light emitting source.

Advantageously, this allows for a single assembly to be fitted to the door which provides the dual functions of being able to latch the door and also providing a warning light to other road users.

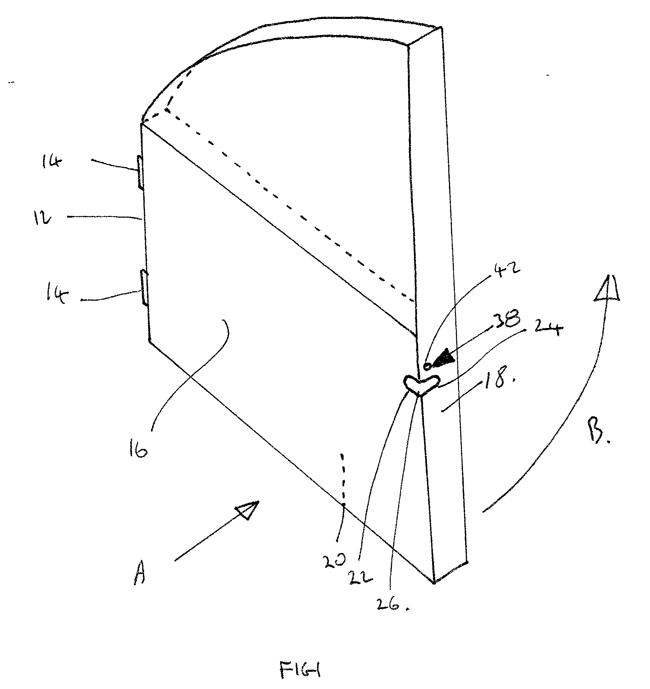

The invention will now described, by way of example only with, reference to the accompanying drawings in which:-
Figure 1 is an isometric view of a vehicle door according to the present invention including a vehicle door latch according to the present invention, and

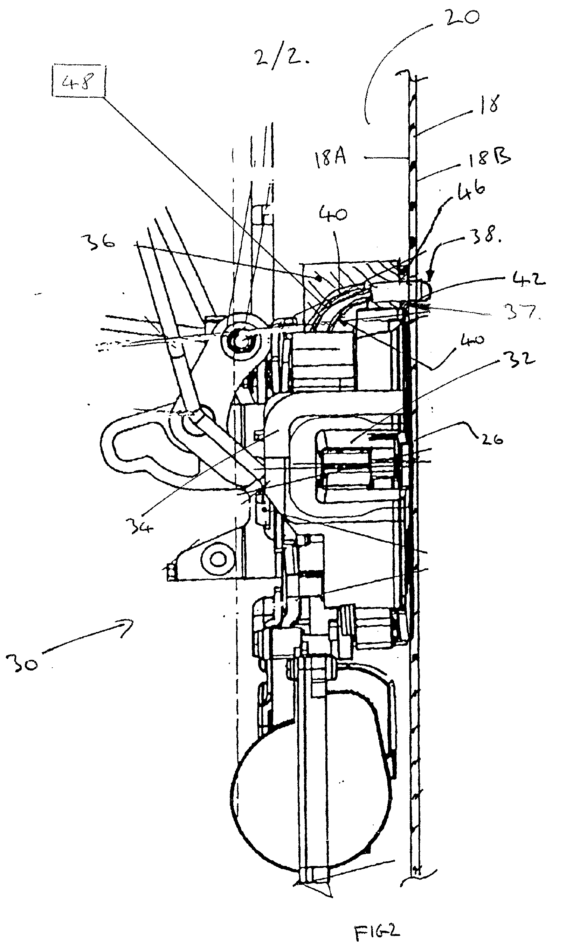

Figure 2 is a cut away view of the door of figure 1 taken in the direction of arrow A.

With reference to the figures there is shown a vehicle door 10, in this case a front right hand side vehicle door. Door 10 is hinged at a front edge panel 12 via hinges 14 to allow the door to open in the direction of arrow B.

The door includes an inner panel 16 and a rear edge panel 18.

An outer panel (not shown) lies substantially parallel to inner panel 16 and the inner panel 16, rear edge panel 18, front edge panel 12 and outer panel together form a door recess 20.

Rear edge panel 18 includes an inner surface 18A and an outer surface 18B (when considering the door recess 20).

With the door closed the outer panel lies substantially flush with the front wing and the outer surface of the B or C post (not shown). Thus with the door closed the rear and front edge panels are obscured from view.

A cut out 22 is provided on the rear edge of inner panel 16 adjacent a cut out 24 in the rear edge panel 18. Cut outs 22 and 24 combine to form a striker mouth 26 into which a door striker (not shown) mounted on fixed structure of the vehicle enters when the door is closed.

A door latch 30 is provided in the door recess 20 and is secured to the rear edge panel 18 via screws (not shown), such that a latch striker mouth 32 is aligned with the door striker mouth 26.

The door latch 30 includes a housing 34 with a portion 36 which projects upwardly and includes a light emitting diode (LED) 38.

The LED 38 is mounted on a rearwardly facing surface 37 in portion 36 and includes electrical wires 40 which are connected to a door ajar switch (shown schematically at 48) of the latch.

The LED projects through a pierced hole 42 of the rear edge panel 18. Thus a portion of the LED is positioned on the outside surface 18B of the door (when considering the door recess 20).

In this case the LED produces visible red light.

A seal 46 is provided between portion 36 and the inner surface 18A of the rear edge panel 18 in order to prevent ingress of water, dust etc into the door recess 20.

In further embodiments an alternative light emitting source may be used.

Depending upon the installation, different colours of light may be emitted. For example, a side passenger door which is hinged at the rear may utilise white light (which would be visible form the front of the vehicle when the door is open). Similarly, white light might be used in a car bonnet (hood) latch or on the front edge of a sliding passenger side door. A red light might also be used in a boot (trunk) latch or on other rearwardly opening doors.

In alternative embodiments the light need not be controlled by a door ajar switch of the latch. Thus the light might be controlled by a door ajar switch which is remote from the latch, or alternatively other control means might be provided to switch the light on and off.

The light can be provided at any position on the latch and in particular may be provided in the latch striker mouth. This beneficially means that a separate hole is not required to be pierced in the panel of the door adjacent to the latch.

The light emitting source may project through a hole as shown in the described embodiment or alternatively the light emitting source may be positioned completely within the door recess and a hole may then be provided through which the light passes.

## Claims

1. A vehicle door latch (30) including a light emitting source (38).

2. A vehicle door latch as defined in claim 1 in which the light emitting source is red or white.

3. A vehicle door latch as defined in claim 1 or 2 in which the light emitting source is positioned on a surface (37) of the latch which surface faces substantially rearwardly in use.

4. A vehicle door latch as defined in any preceding claim in which the light emitting source is a light emitting diode (38).

5. A vehicle door latch as defined in any preceding claim in which, in use, the light emitting source is operably connected to a door ajar switch (48) to operate the light emitting source.

6. A vehicle door latch as defined in claim 5 in which the door ajar switch is incorporated into the vehicle door latch.

7. A vehicle door latch as defined in any preceding claim in which the latch includes a striker mouth (26), and the light emitting source is positioned in the striker mouth.

8. A vehicle door (10) including a vehicle door latch according to any preceding claim.

9. A vehicle door as defined in claim 8 in which the latch is secured to the inside of a rear (18) or front (12) facing edge panel of the door.

10. A vehicle door as defined in claim 9 in which the rear or front edge panel includes a hole (42) which allows light from the light emitting source to pass through.

11. A vehicle door as defined in claim 9 in which the rear or front edge panel includes a hole (42) which allows at least a portion of the light emitting source to be positioned on the outside of the rear or front edge panel.

12. The vehicle door as defined in any one of claims 9 to 11 in which the rear or front edge panel of the door is substantially obscured from view when the door is closed.
